# EUROPÄISCHE PATENTSCHRIFT

(11) **EP 2 850 355 B1**
(45) Veröffentlichungstag und Bekanntmachung des Hinweises auf die Patenterteilung: **11.01.2017**
(21) Anmeldenummer: 13712746.0
(22) Anmeldetag: 25.03.2013
(51) Int. Cl.: F16L 37/098, F16L 37/12, F16L 37/14

(54) **STECKVERBINDUNG FÜR FLUID-LEITUNGEN UND HALTETEIL FÜR EINE DERARTIGE STECKVERBINDUNG**
PLUG CONNECTION FOR FLUID LINES AND HOLDING PART FOR SUCH A PLUG CONNECTION
ASSEMBLAGE PAR EMBOÎTEMENT POUR CONDUITES DE FLUIDE ET PARTIE DE RETENUE POUR UN ASSEMBLAGE PAR EMBOÎTEMENT DE CE TYPE

(30) Priorität: 16.05.2012 DE 102012104288
(43) Veröffentlichungstag der Anmeldung: 25.03.2015
(73) Patentinhaber: Voss Automotive GmbH, 51688 Wipperfürth (DE)
(72) Erfinder: HESS, Jochem-Andreas, 51688 Wipperfürth (DE); SIEPER, Günter, 42853 Remscheid (DE); PLIETSCH, Reinhard, 42929 Wermelskirchen (DE)
(74) Vertreter: Patent- und Rechtsanwälte Dr. Solf & Zapf
(86) Internationale Anmeldenummer: PCT/EP2013/056178
(87) Internationale Veröffentlichungsnummer: WO 2013/170986

(56) Entgegenhaltungen:
- EP-A1- 1 806 528
- WO-A1-03/040607
- WO-A1-2006/018384
- WO-A1-2009/156399
- DE-A1-102005 038 439

## Beschreibung

Die vorliegende Erfindung betrifft ein Halteteil für eine Steckverbindung, sowie eine Steckverbindung für Fluid-Leitungen, umfassend zwei zusammensteckbare Kupplungsteile, die im eingesteckten Zustand über eine Verriegelungseinrichtung lösbar arretierbar ist, die einerseits aus zwei äußeren, radialen, flanschartigen und im eingesteckten Zustand axial, in Steckrichtung benachbarten Haltestegen der beiden Kupplungsteile und andererseits aus dem Halteteil mit einer umfangsgemäß geschlossenen Ringkontur besteht, welches in einem Vormontagezustand an einem der beiden Kupplungsteile axial und radial fixiert unverlierbar montierbar ist und im Montagezustand mit mindestens einem im Axialschnitt C-förmigen, zwei Bünde aufweisenden, radial elastisch beweglichen Halteabschnitt die Haltestege der beiden Kupplungsteile axial und radial umgreift.

Des Weiteren betrifft die vorliegende Erfindung eine vormontierte Baueinheit bestehend aus einem erfindungsgemäßen Halteteil, das in einem Vormontagezustand an einem Kupplungsteil einer erfindungsgemäßen Steckverbindung unverlierbar befestigt ist.

Ein ähnliche Steckverbindung, wie die vorstehend beschriebene, ist aus der WO 2006/018384 A1 bekannt, in der von einem bekannten Verriegelungsprinzip ausgegangen wird, wonach ein C-förmiger Halteabschnitt eines Halteteiles Haltestege von Kupplungsteilen formschlüssig umgreift und damit arretiert. Um die Verlustgefahr des Halteteiles zu reduzieren und eine Montage, besonders auch in Anwendungsfällen, bei denen am Montageort nur ein kleiner Umgebungsraum zur Verfügung steht, oder bei denen in den Kupplungsteilen mindestens ein Ventil integriert sein soll, zu vereinfachen, ist dabei vorgesehen, dass das Halteteil derart ausgebildet und an dem einen der beiden Kupplungsteile derart unverlierbar vormontiert bzw. vormontierbar ist, dass es einerseits axial spielarm und radial verliersicher fixiert und andererseits im Bereich des Halteabschnittes radial elastisch beweglich ist. Dabei sind das Halteteil im Bereich des Halteabschnittes sowie der Haltesteg des anderen Kupplungsteils in Anpassung aneinander zur Bildung einer in Steckrichtung wirkenden, formschlüssigen Rastverbindung derart ausgebildet, dass beim Zusammenstecken der Kupplungsteile der Halteabschnitt durch den sich dazu relativ bewegenden Haltesteg radial nach außen bewegt wird und nachfolgend im eingesteckten Zustand durch radiale Zurückbewegung nach innen die Haltestege der beiden Kupplungsteile zur Verriegelung umgreift. Bevorzugt ist das Halteteil als einteiliges Ringteil ausgebildet, das an einer Umfangsstelle eine axial und radial durchgehende Schlitzunterbrechung aufweist. Diese bekannte Steckverbindung ermöglicht eine einfache, schnelle und komfortable sowie auch sehr sichere Einhand-Montage. Um, wenn das Halteteil von den Kupplungsteilen gelöst ist, die Verlustgefahr zu reduzieren, sieht die WO 2006/018384 A1 vor, das Halteteil über ein zusätzliches, insbesondere band- oder schnurartiges, einendig am Kupplungsteil und anderendig am Halteteil befestigbares Sicherungselement verliersicher mit dem einen Kupplungsteil zu verbinden.

Eine Steckverbindung der eingangs genannten Art ist aus der WO 2009/156399 A1 bekannt. In diesem Dokument wird das zusätzliche Sicherungselement als nachteilig angesehen. Um unter Verzicht auf ein derartiges zusätzliches Sicherungselement zu erreichen, dass bei einer geringen Verlustgefahr des Halteteiles mit verringertem Aufwand eine Positionierung des Halteteiles und die Wiedermontage erleichtert wird, ist vorgesehen, das Halteteil ringförmig auszubilden, wobei das Halteteil mit einer umfangsgemäß geschlossenen Ringkontur in einem Vormontagezustand und im Montagezustand mindestens eines der beiden Kupplungsteile umgibt. Das Halteteil kann dabei vorzugsweise an einem Steckerteil unverlierbar vormontierbar sein, wobei es in zwei Positionen, der Vormontagestellung und der Montagestellung fixierbar ist. Durch eine radiale Verschiebung gelangt es aus der Vormontagestellung in die Montagestellung bzw. durch eine gegensinnige Verschiebung zur Demontage aus der Montagestellung zurück in die Ursprungsposition. Hierbei ist insbesondere eine Formgestaltung bevorzugt, bei der eine von der Ringkontur umschlossene Ringöffnung im Querschnitt gesehen aus einer ersten kreisförmigen Teilöffnung mit einem Mittelpunkt im Bereich des Halteabschnitts und aus einer zweiten kreisförmigen Teilöffnung gebildet ist, deren Mittelpunkt innerhalb eines Sicherungsabschnitts des Halteteils liegt, wobei sich die beiden Teilöffnungen durchdringen. Dadurch hat das Halteteil zwangsläufig eine vergrößerte radiale Erstreckung, was insbesondere dann als nachteilig anzusehen ist, wenn nur sehr wenig Montageraum zur Verfügung steht.

DE102005038439A1 offenbart den Oberbegriff von Anspruch 1 und 13.

Der vorliegenden Erfindung liegt die Aufgabe zugrunde, eine Steckverbindung der eingangs genannten Art sowie ein Halteteil für eine derartige Steckverbindung so zu verbessern, dass unter Beibehaltung der Vorteile des bekannten Verriegelungsprinzips sowie der geringen Verlustgefahr für das Halteteil, die Montage und Demontage weiter vereinfacht werden kann, und zwar besonders auch in Anwendungsfällen, bei denen am Montageort, insbesondere für die Demontage, nur ein sehr geringer Umgebungsraum zur Verfügung steht.

Erfindungsgemäß wird dies für die Steckverbindung beziehungsweise das Halteteil durch den kennzeichnenden Teil von Anspruch 1 beziehungsweise Anspruch 13 erreicht.

Einerseits sind in der erfindungsgemäßen Steckverbindung die Vorteile des bekannten, gattungsgemäßen Verriegelungsprinzips mit den Vorteilen eines Steckrastprinzips kombiniert. Wenn das Halteteil unverlierbar an dem einen Kupplungsteil vormontiert ist, braucht das andere Kupplungsteil zur Montage nur noch axial gesteckt zu werden, was eine einfache, schnelle, komfortable und sichere automatisierte oder Einhand-Montage ermöglicht.

Andererseits braucht dabei durch die erfindungsgemäße Ausgestaltung bei einem Lösen der Verbindung keine stark raumgreifende radiale Verschiebung zur Demontage des Halteteiles durchgeführt werden, was von besonderem Vorteil an Montageorten mit nur geringem Umgebungsraum in radialer Richtung ist.

An dem Halteteil kann dabei bevorzugt durch ein Betätigen bzw. Drücken auf eine Druckfläche oder durch ein Ziehen bzw. Hebeln mit einem Werkzeug unter Angriff in einem umfangsgemäß zwischen zwei Halteabschnitten liegenden elastischen Bereich eine radiale Aufweitung herbeigeführt werden, die ausreichend ist, um ein Kupplungsteil wieder axial aus der Verbindung herauszuziehen. Das erfindungsgemäße Halteteil kann dabei über nockenartige Vorsprünge an einem größeren der beiden Bünde des Halteabschnittes, der den Haltesteg des anderen Kupplungsteiles, an dem er im Montagezustand anliegt, noch hintergreift, in einer Ringnut des Kupplungsteiles axial fixiert bleiben und somit festgehalten werden.

Weitere vorteilhafte Ausgestaltungsmerkmale der Erfindung sind in den Unteransprüchen sowie der folgenden Beschreibung enthalten.

Anhand mehrerer bevorzugter, in der Zeichnung veranschaulichter Ausführungsbeispiele soll die Erfindung genauer erläutert werden. Dabei zeigen:
- Fig. 1: eine teilgeschnittene Perspektivansicht einer erfindungsgemäßen Steckverbindung mit einer ersten Ausführung eines erfindungsgemäßen Halteteiles bei gestecktem und verriegeltem Zustand der Kupplungsteile,
- Fig. 2: ein vergrößerter Längsschnitt (entlang der Achse Y1-Y1) auf die in Fig. 1, 5 und 6 dargestellte Ausführung eines erfindungsgemäßen Halteteiles einer erfindungsgemäßen Steckverbindung,
- Fig. 3: ein Axialschnitt durch eine Ausführung eines als Steckerteil ausgebildeten Kupplungsteils einer erfindungsgemäßen Steckverbindung, wobei die Schnittebenen in den beiden Figurenhälften - ähnlich wie in Fig. 1 - versetzt sind, und zwar beispielsweise um 45°,
- Fig. 4a: eine Draufsicht auf die in Fig. 1, 5 und 6 dargestellte Ausführung eines erfindungsgemäßen Halteteiles einer erfindungsgemäßen Steckverbindung,
- Fig. 4b: eine durch die Mittenebene IV-IV des in Fig. 2 dargestellten erfindungsgemäßen Halteteiles verlaufende Schnittdarstellung,
- Fig. 5: eine perspektivische Draufsicht auf die erste Ausführung eines erfindungsgemäßen Halteteiles einer erfindungsgemäßen Steckverbindung,
- Fig. 6: das in Fig. 5 dargestellte erfindungsgemäße Halteteil in perspektivischer Unteransicht,
- Fig. 7: eine axial geschnittene Ansicht der in Fig. 1 dargestellten erfindungsgemäßen Steckverbindung im Vormontagezustand bei der Montage,
- Fig. 8: eine teilgeschnittene perspektivische Ansicht der in Fig. 1 dargestellten erfindungsgemäßen Steckverbindung bei der Demontage,
- Fig. 9: in verkleinertem Maßstab gegenüber Fig. 7, eine Schnittdarstellung der in Fig. 7 gezeigten erfindungsgemäßen Steckverbindung bei der Demontage,
- Fig. 10 bis 12: verschiedene Schnittdarstellungen der bei der Demontage dargestellten erfindungsgemäßen Steckverbindung gemäß den Schnittlinien X-X, XI-XI und XII-XII in Fig. 7,
- Fig. 13: eine perspektivische Unteransicht auf ein erstes Ringteil einer zweiten Ausführung eines erfindungsgemäßen Halteteiles einer erfindungsgemäßen Steckverbindung,
- Fig. 14: eine perspektivische Unteransicht auf ein zweites Ringteil der zweiten Ausführung eines erfindungsgemäßen Halteteiles einer erfindungsgemäßen Steckverbindung,
- Fig. 15: eine perspektivische Unteransicht der aus den beiden in Fig. 13 und 14 dargestellten Ringteilen gebildeten zweiten Ausführung des erfindungsgemäßen Halteteiles,
- Fig. 16: eine Schnittdarstellung des erfindungsgemäßen Halteteiles entlang der Linie XVI-XVI in Fig. 15,
- Fig. 17: ähnlich wie in Fig. 5, eine perspektivische Draufsicht auf die zweite Ausführung eines erfindungsgemäßen Halteteiles einer erfindungsgemäßen Steckverbindung,
- Fig. 18 und 19,: aus unterschiedlichen Blickwinkeln, zwei perspektivische Draufsichten auf ein erstes Einzelteil einer dritten Ausführung eines erfindungsgemäßen Halteteiles einer erfindungsgemäßen Steckverbindung,
- Fig. 20: in einer Darstellung ähnlich wie in Fig. 5 und 17, eine perspektivische Draufsicht auf die aus dem in Fig. 18 und 19 dargestellten Einzelteil gebildete dritte Ausführung des erfindungsgemäßen Halteteiles,
- Fig. 21: eine Schnittdarstellung des Halteteiles entlang der Linie XXI-XXI in Fig. 22,
- Fig. 22: in einer Darstellung ähnlich wie in Fig. 15, jedoch aus anderem Blickwinkel, eine perspektivische Unteransicht einer dritten Ausführung des erfindungsgemäßen Halteteiles,
- Fig. 23: in einer Darstellung ähnlich wie in Fig. 20, eine perspektivische Draufsicht auf eine vierte Ausführung des erfindungsgemäßen Halteteiles,
- Fig. 24: in einer Darstellung ähnlich wie in Fig. 5, eine perspektivische Draufsicht auf eine fünfte Ausführung des erfindungsgemäßen Halteteiles,
- Fig. 25: in einer Darstellung ähnlich wie in Fig. 23, jedoch aus anderem Blickwinkel, eine perspektivische Draufsicht auf eine sechste Ausführung des erfindungsgemäßen Halteteiles,
- Fig. 26: eine siebte Ausführung des erfindungsgemäßen Halteteiles, in einem Schnitt gemäß der Linie XXVI-XXVI in Fig. 27,
- Fig. 27: die siebte Ausführung des erfindungsgemäßen Halteteiles, in einer Darstellung ähnlich wie in Fig. 4b, jedoch vergrößert und gedreht,
- Fig. 28: eine achte Ausführung des erfindungsgemäßen Halteteiles in einer Darstellung ähnlich wie in Fig. 27.

In den verschiedenen Figuren der Zeichnung sind gleiche Teile stets mit den gleichen Bezugszeichen versehen und brauchen daher in der Regel jeweils nur einmal beschrieben zu werden.

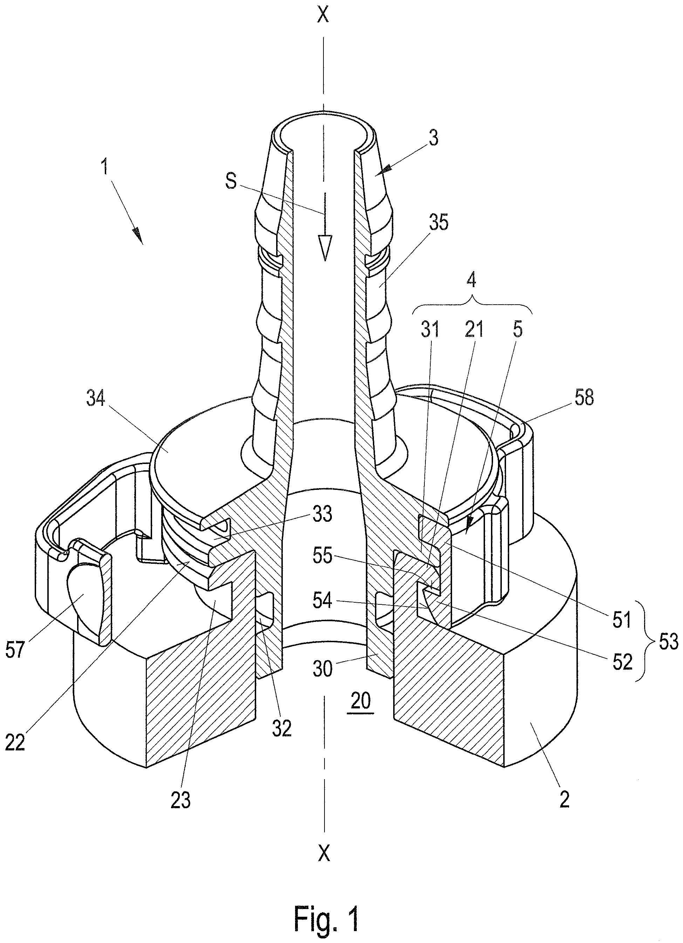

Eine erfindungsgemäße Steckverbindung 1, die insbesondere zum Verbinden von Fluidleitungen zum Einsatz kommen kann, umfasst zwei zusammensteckbare Kupplungsteile 2, 3, die in dem in Fig. 1 dargestellten Montagezustand ineinander eingesteckt und in diesem Zustand über eine Verriegelungseinrichtung 4 lösbar arretierbar sind. Bei den beiden zusammensteckbaren Kupplungsteilen 2, 3 handelt es sich insbesondere um ein Muffenteil 2 und um ein Steckerteil 3, welches mit einem Steckerschaft 30 dichtend in eine Aufnahmeöffnung 20 des Muffenteils 2 axial (Achse X-X) einsteckbar ist und dort im eingesteckten Zustand mittels der Verriegelungseinrichtung 4 festgehalten wird. Die beiden Kupplungsteile 2, 3 können bevorzugt beide aus Kunststoff bestehen.

Die Verriegelungseinrichtung 4 besteht dabei einerseits aus zwei äußeren, radialen, flanschartigen und im eingesteckten Zustand axial, in Steckrichtung (Pfeil S) benachbarten Haltestegen 21, 31 der beiden Kupplungsteile 2, 3 und andererseits aus einem Halteteil 5. Auch das Halteteil 5 kann insbesondere zur Verwendung bei geringeren Fluiddrücken mit Vorteil als Kunststoff-Formteil ausgebildet sein, wobei z. B. auch ein thermoplastisches Elastomer-Material eingesetzt werden kann.

Zur Abdichtung der Steckverbindung 1 kann - wie in Fig. 1, 3, 7, 8 und 9 dargestellt - bevorzugt am Steckerschaft 30 eine Ringnut 32 vorgesehen sein, in die eine nicht dargestellte Umfangsdichtung, insbesondere in Form eines Dichtrings, eingebracht werden kann.

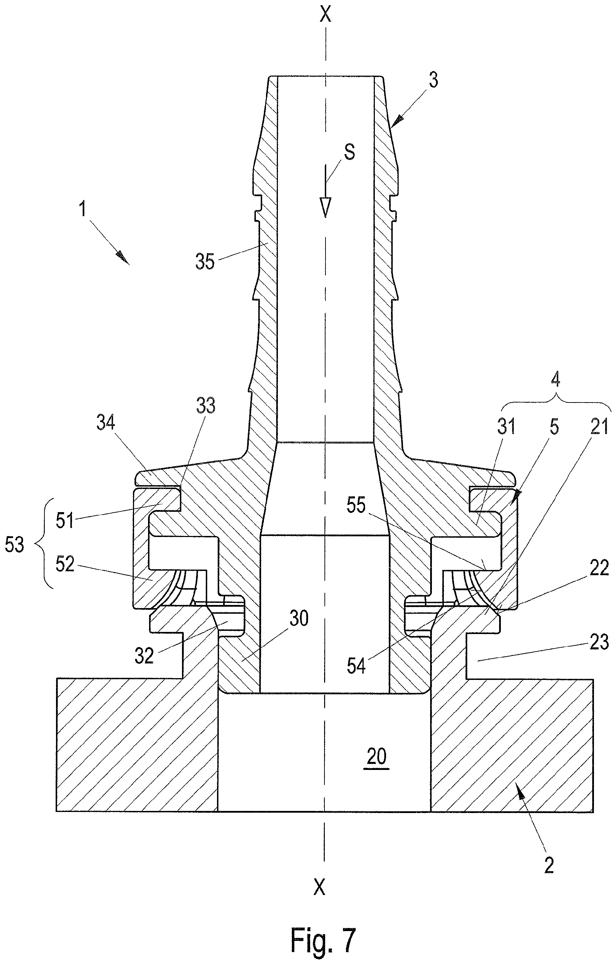

Das Halteteil 5, welches in Fig. 1 und 2, 4a und 4b sowie 5 bis 12 in einer ersten Ausführung dargestellt ist, weist eine nicht näher bezeichnete, umfangsgemäß geschlossene Ringkontur auf und kann in einem in Fig. 7 gezeigtem Vormontagezustand an einem der beiden Kupplungsteile 2, 3 - in den gezeigten Ausführungen am Steckerteil 3 - axial und radial fixiert unverlierbar montiert werden. Dazu kann zunächst eine federelastische Aufweitung, dann ein Überstreifen des Halteteils 5 über das Kupplungsteil 2, 3 und eine anschließende federelastische Rückverformung des Ringes erfolgen. Die Unverlierbarkeit des Halteteils 5 wird dabei durch die geschlossene Ringform gewährleistet. Dadurch, dass das Halteteil 5 eines der Kupplungsteile 2, 3 mit einem Winkel von 360°, also vollständig, umschließt, ist ein zusätzliches Sicherungselement vorteilhafterweise nicht erforderlich.

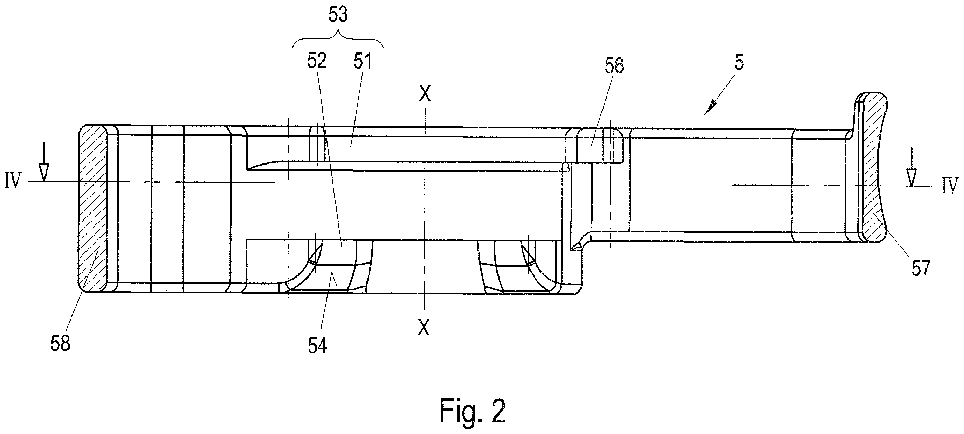

Aus der Darstellung des in Fig. 1 gezeigten Montagezustandes geht dabei hervor, dass das Halteteil 5 mindestens einen im Axialschnitt C-förmigen, zwei Bünde 51, 52 aufweisenden, radial elastisch beweglichen Halteabschnitt 53 aufweist, der nach der Montage die Haltestege 21, 31 der beiden Kupplungsteile 2, 3 axial und radial formschlüssig umgreift. In allen dargestellten Ausführungen sind jeweils zwei, symmetrisch bezüglich einer Längsachse Y1-Y1 des Halteteiles 5 auf einer Querachse Y2-Y2 diametral einander gegenüber liegende Halteabschnitte 53 vorgesehen (siehe Fig. 2, 4a, 4b, 10 bis 12), wobei aber auch durch eine optionale umfangsgemäße Segmentierung der Halteabschnitte 53 eine größere Anzahl von Haltebereichen vorhanden sein kann.

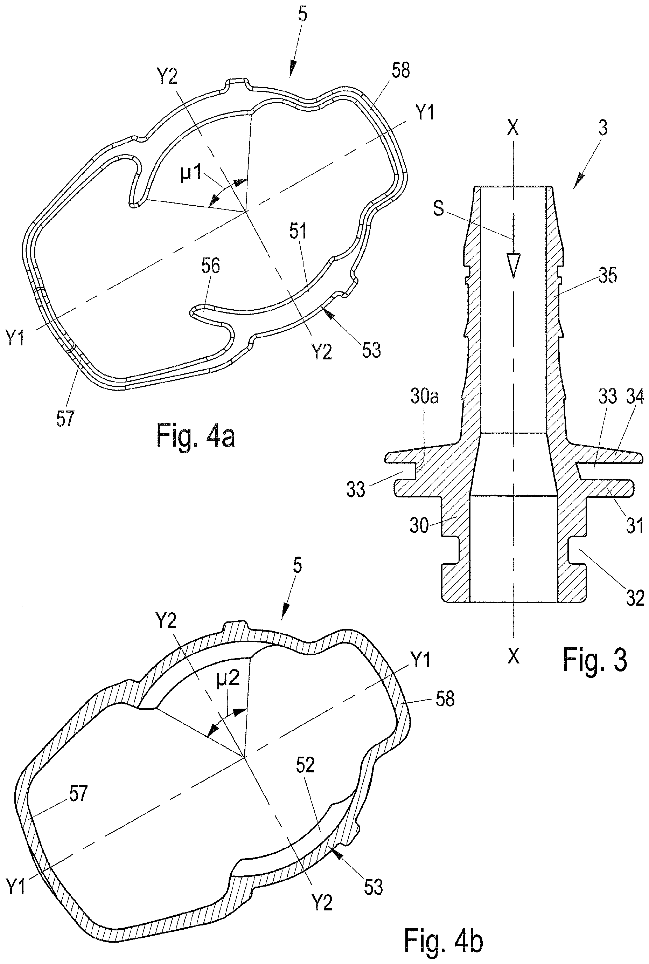

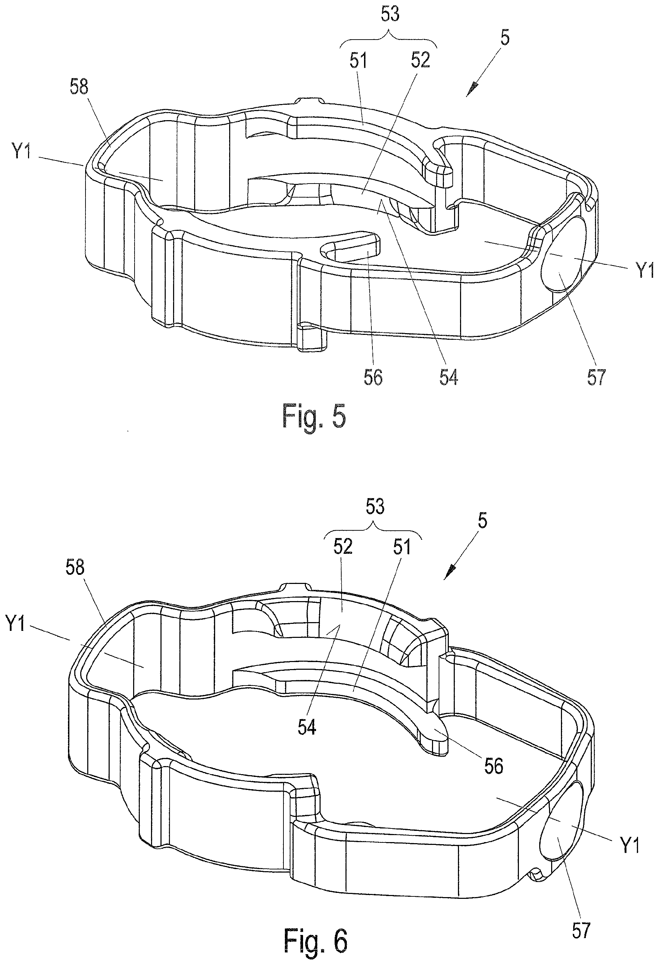

Eine exemplarische Ausführung des ersten, in Fig. 1, 2 und 5 oberen Bundes 51 des Halteabschnitts 53 ist sehr deutlich Fig. 4a, und eine exemplarische Ausführung des zweiten, in Fig. 1, 2 und 5 unteren Bundes 52 ist Fig. 4b zu entnehmen. In allen dargestellten Ausführungen sind jeweils zwei, diametral einander gegenüber liegende Halteabschnitte 53 mit derartigen Bünden 51, 52 vorhanden, wie dies insbesondere durch die jeweiligen perspektivischen Einzeldarstellungen der verschiedenen Ausführungen des Halteelementes in Fig. 5, 6, 15, 17, 19 und 22 bis 25 veranschaulicht wird.

Der zweite Bund 52 eines jeden Halteabschnittes 53 des Halteteiles 5 ist als Rastelement mit einer radialen inneren Schrägfläche 54 ausgebildet, die vorzugsweise konvex ausgebildet sein kann und auf der beim Steckvorgang dem Muffenteil 2 zugewandten Seite liegt. Wenn - wie Fig. 7 zeigt - das Steckerteil 3, an dem das Halteteil 5 vormoniert ist, zur Montage, die mit einer Verrastung abschließt, entlang der Achse X-X in die Aufnahmeöffnung 20 des Muffenteils 2 eingesteckt wird, wirkt diese Schrägfläche 54 als Spreizfläche für das Halteteil 5 bzw. genauer für dessen zweiten Bund 52.

Indem die Spreizfläche 54 relativ zu einer Gegen-Spreizfläche 22 des als Gegenrastelement wirkenden Haltesteges 21 gleitet, bewirkt dies unter der Wirkung einer Montagekraft beim Einstecken um einen bestimmten axialen Montageweg eine radial nach außen gerichtete Spreizbewegung des Halteteiles 5 quer zur Achse X-X um einen radialen Spreizweg. Nach Erreichen des Endes des Spreizweges hintergreift der Bund 52 formschlüssig rastend mit einer radialen Haltekante 55 den Haltesteg 21 des Muffenteiles 2, so dass sich eine in Steckrichtung S wirkende formschlüssige Rastverbindung ausbildet, wie sie Fig. 1 zeigt. Beim Zusammenstecken der Kupplungsteile 2, 3 wird also der Halteabschnitt 53 durch den sich dazu relativ bewegenden Haltesteg 21 radial nach außen bewegt und nach einer nachfolgenden radialen Zurückbewegung nach innen umgreift er im eingesteckten Zustand C-förmig verriegelnd die Haltestege 21, 31 der beiden Kupplungsteile 2, 3.

In besonders bevorzugter Ausbildung kann dabei eine der Gegen-Spreizfläche 22 zugewandte Kontur der Spreizfläche 54 derart auf eine der Spreizfläche 54 zugewandte Gegen-Kontur der Gegen-Spreizfläche 22 abgestimmt sein, dass sich der Spreizweg beim Einstecken in Abhängigkeit vom Montageweg nichtlinear, insbesondere in verschiedenen Montagephasen beim Einstecken zumindest teilweise überproportional, proportional und/oder unterproportional, ändert. Dadurch kann einerseits eine während des Steckens maximal aufzuwendende Montagekraft verringert werden, indem die optimierte Montageweg-Montagekraft-Charakteristik es gestattet, die Höhe von während des Steckens auftretenden Montagekraft-Peaks zu verringern. Andererseits ist es möglich, eine gleichmäßige Verteilung der für die Montage aufzuwendenden Arbeit über den gesamten Steckvorgang zu erzielen. Dabei ist es mit Vorteil zusätzlich auch möglich, den gesamten Montageweg im Vergleich zu einer Ausbildung mit ebener Spreizfläche 54 zu verkürzen, was insbesondere unter dem Aspekt einer Minimierung des notwendigen Bauraums zu Vorteilen führt.

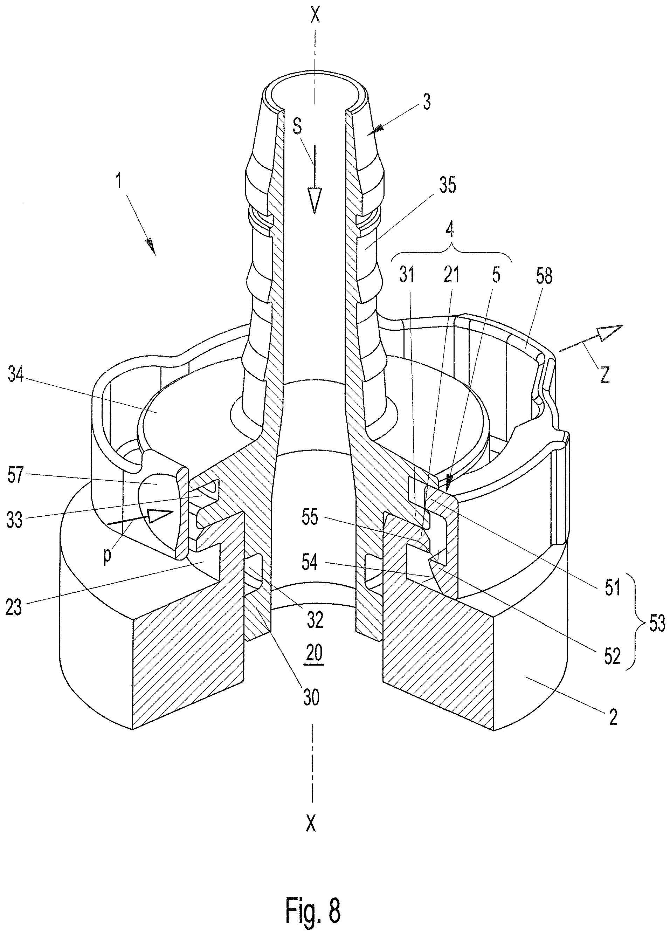

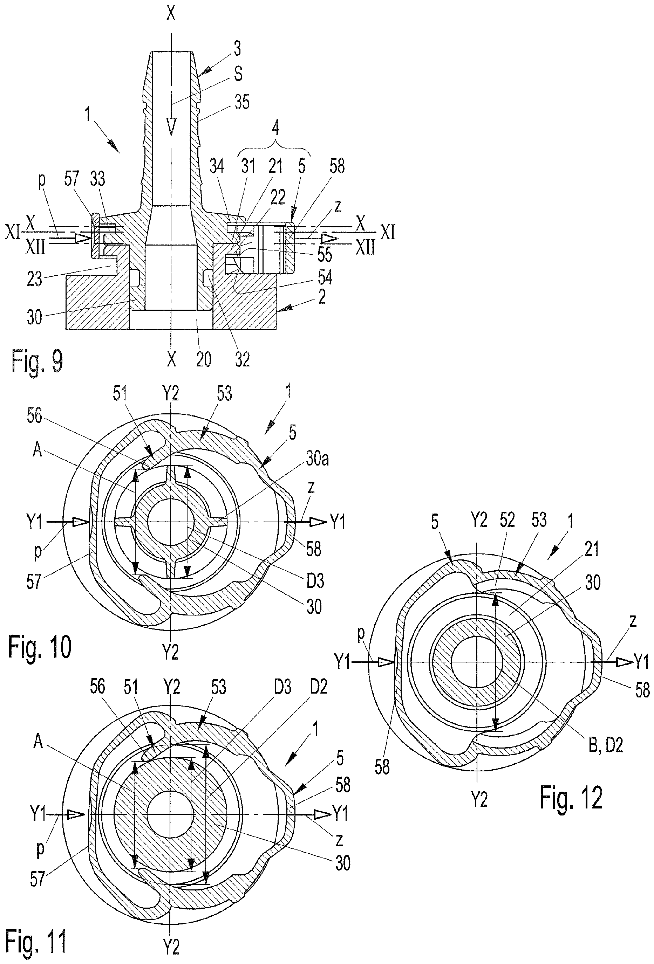

In der erfindungsgemäßen Steckverbindung 1 bzw. für das erfindungsgemäße Halteteil 5 ist vorgesehen, dass die Bünde 51, 52 im Halteabschnitt 53 des Halteteiles 5 derart mit unterschiedlicher Größe und/oder Form ausgebildet sind, dass bei einer radial elastischen Bewegung des Halteabschnittes 53 aus dem Montagezustand heraus nach außen ein Bund 52, der im Montagezustand am Haltesteg 21 des einen Kupplungsteiles 2 anliegt, diesen Haltesteg 21 des Kupplungsteiles 2 freigibt, während der andere Bund 51, zumindest bereichsweise, den Haltesteg 31 des anderen Kupplungsteiles 3, an dem er anliegt, noch hintergreift. Diese erfindungsgemäße Ausbildung wird insbesondere durch Fig. 8 bis 12 veranschaulicht. Fig. 12 zeigt dabei insbesondere die Freigabe des Haltesteges 21 des Muffenteiles 2 durch den unteren, zweiten Bund 52, und Fig. 10 sowie Fig. 11 eine Anlage des oberen, ersten Bundes 51 am Schaft 30 des Steckerteiles 3.

Wie die jeweiligen Einzelteildarstellungen des Halteteiles 5 in Fig. 2, 4a, 4b, 5 und 6, 15, 17, 20 und 22 bis 25 zeigen, kann die geschlossene Ringform des Halteteils 5 im nicht deformierten Zustand insbesondere eine eiförmige oder elliptische Grundgestalt aufweisen, in der sich die Halteabschnitte 53 an den Längsseiten befinden.

Die Bünde 51, 52 des jeweiligen Halteabschnittes 53 können, wie z. B. Fig. 4a und 4b zeigen, bevorzugt eine sichelförmige Gestalt aufweisen, so dass sie im Montagezustand den Schaft 30 des Steckerteiles 3, vorzugsweise im Bereich einer Umfangsnut 33 des Steckerteiles 3, und das Muffenteil 2, unterhalb seines Haltesteges 21, d. h. auf der dem Steckerteil 3 abgewandten Seite, vorzugsweise im Bereich einer Umfangsnut 23 des Muffenteils 2, formschlüssig umgreifen. Die Darstellung in Fig. 3 und insbesondere der Schnitt in Fig. 10 zeigen dabei, dass sich in der Umfangsnut 33 - im Sinne einer vorteilhaft einerseits massereduzierenden und damit materialsparenden, dabei jedoch gleichzeitig andererseits auch stabilen Ausführungen Rippen 30a vorgesehen sein können.

Für eine Vormontage-Fixierung des Halteteiles 5 kann das zugehörige Kupplungsteil 2, 3 bevorzugt - wie in Fig. 1 und 3 sowie 7 bis 9 dargestellt - das Steckerteil 4, zur Bildung der Umfangsnut 33, die den korrespondierenden radialen Bund 51 des Halteteiles 5 aufnimmt, einen zusätzlichen Fixierringsteg 34 aufweisen. Dieser kann bevorzugt einen Durchmesser aufweisen, der größer als der Durchmesser des Haltesteges 31 ist. Der Durchmesser des Haltesteges 31 entspricht stattdessen vorzugsweise etwa einem Innendurchmesser des Haltebereiches 53 in einem Innenflächenbereich zwischen den Bünden 51, 52.

Durch einen Vergleich der Fig. 4a und 4b lässt sich leicht feststellen, dass die beiden Bünde 51, 52 - in der Draufsicht gesehen - vorzugsweise kongruent ausgebildet sein können-bis auf einen erfindungsgemäßen nockenartigen, umfangsgemäß verlaufenden, zusätzlich leicht radial einwärts gewölbten Ansatz 56 des oberen, ersten Bundes 51, um den der Bund 51 gegenüber dem unteren, zweiten Bund 52 vorsteht. Durch diesen Ansatz 56 umfasst im Montagezustand der obere, erste Bund 51 das Steckerteil 3 über einen größeren Winkelbereich als der untere, zweite Bund 52 das Muffenteil 2.

Anders ausgedrückt: Ein Zentriwinkel µ1, der im Montagezustand zwischen Anfang und Ende des fixierend wirkenden Bereichs des ersten Bundes 51 aufgespannt ist (Fig. 4a), ist größer als ein entsprechender Winkel µ2 des zweiten Bundes 52 (Fig. 4b). Die oberen Bünde 51 der Haltebereiche 53 erstrecken sich somit immer - also nach der Vormontage, nach der Montage und auch bei der Demontage - über einen Umfangswinkel µ1, der mindestens derart groß bemessen ist, dass im maximal gespreizten Zustand ein Abstand A zwischen den Ansätzen 56 (siehe insbesondere Fig. 10 und 11 für die Demontage) hinsichtlich seiner lichten Öffnungsweite stets kleiner ist als der jeweils zugehörige Durchmesser D2, D3 des zugehörigen Kupplungsteils 2, 3 - im vorliegenden Fall des Durchmessers D3 des Steckerteils 3 im Bereich seiner Umfangsnut 33.

Allgemeiner ausgedrückt: Das erfindungsgemäße Halteteil 5 ist derart bemessen, dass einer der beiden Bünde 51, 52 einen nockenartigen, umfangsgemäß verlaufenden, zusätzlich radial einwärts gewölbten Ansatz 56 aufweist, durch den er sich in Größe und Form von dem anderen Bund 52, 51 unterscheidet und um den erin axialer Projektion gesehen - gegenüber dem anderen Bund 52, 51 vorsteht. Bei Vorhandensein von jeweils zwei gleichartig ausgebildeten Bünden 51, 52 erstreckt sich jeweils der Bund 51 mit dem Ansatz 56 - sowohl nach einer Vormontage des Halteteils 5 an einem der beiden Kupplungsteile 2, 3, als auch nach einer Montage mit beiden Kupplungsteilen 2, 3 und bei einer Demontage des Halteteils 5 - über einen Umfangswinkel µ1 mindestens eines Kupplungsteiles 2, 3, der derart groß bemessen ist, dass in dem maximal gespreizten Zustand des Halteteiles 5 der Abstand A zwischen den Ansätzen 56 zweier sich diametral gegenüber liegender Bünde 51 stets kleiner ist als ein Durchmesser D2, D3 des Kupplungsteils 2, 3, an dem der Bund 51 anliegt.

An den Querseiten des Halteteils 5 können bevorzugt umfangsgemäß zwischen den Bünden 51, 52 der Halteabschnitte 53 liegende, elastische Betätigungsbereiche 57, 58 ausgebildet sein, in denen durch ein Betätigen bzw. Drücken auf eine Druckfläche 57 (Druckpfeil p in Fig. 8 bis 12) oder durch ein Ziehen bzw. Hebeln mit einem Werkzeug unter Angriff an einem Zugbereich 58 (Zugpfeil z in Fig. 8 bis 12) bei der Demontage eine radiale Aufweitung der Halteabschnitte 53 herbeigeführt werden kann, die ausreichend ist, um ein Kupplungsteil 2, 3 - im vorliegenden Fall das Muffenteil 2 - wieder axial aus der Verbindung herauszuziehen.

Ein lichter, in der Querachse Y2-X2 liegender minimaler Abstand B, der zwischen den entsprechenden Bünden 52 bei der Demontage vorliegt, ist dabei größer als der zugehörige Durchmesser D2, D3 des Kupplungsteils - im vorliegenden Fall größer als der Durchmesser D2 des Muffenteils 2 im Bereich seiner Umfangsnut 23. Das erfindungsgemäße Halteteil 5 wird dabei über die nockenartigen Vorsprünge 56 an dem größeren Bund 51, der den Haltesteg 31, 21 des anderen Kupplungsteiles 3, 2 - im vorliegenden Falls des Steckerteils 3 - an dem er im Montagezustand (und auch im Vormontagezustand) anliegt, noch hintergreift, in der Ringnut 33 des Kupplungsteiles 3 axial fixiert und festgehalten.

Die Betätigungsbereiche 57, 58 können dabei bevorzugt Anschläge bilden, wobei sie, wenn sie in der Richtung der Längsachse Y1-Y1 des Halteteiles 5 bewegt werden, zur Anlage am Kupplungsteil 3 kommen, insbesondere an dessen Schaft 30, z. B. - wie in Fig. 9 gezeigt - der in der linken Figurenhälfte befindliche Betätigungsbereich 57 an dem Fixierringsteg 34 des Schaftes 30, und so die Spreizbewegung des erfindungsgemäßen Halteteils 5, also dessen radiale Aufweitung bzw. die radial elastische Bewegung jedes Halteabschnittes 53 nach außen, entsprechend begrenzen. Dadurch ist dann nach Wegfall der aufgebrachten Druck- und/oder Zugbelastung ein federelastisches Zurückspringen der Halteabschnitte 53 in eine Lage, wie sie vor der Deformation vorlag, leicht möglich. Sofern das andere Kupplungsteil 2 entfernt wurde, liegt dann wieder der Vormontagezustand vor.

Die Vormontage-Fixierung des Halteteils 5 erfolgt - zumindest bei der Ausführung gemäß Fig. 1 bis 12 nach einem axialen Aufschieben des einstückigen Halteteiles 5 auf das Kupplungsteil 3 - durch ein kraftformschlüssiges radiales Aufrasten seiner Haltebereiche 53 auf das Kupplungsteil 3, wobei durch eine Betätigung in mindestens einem der Betätigungsbereiche 57, 58 das Halteteil im Bereich seiner Haltebereiche 53 maximal auseinander gespreizt wird. Nach der Vormontage liegt dann ein Umfassungswinkel der Haltebereiche 53 für das Kupplungsteil vor, der größer ist als 90E, wobei sich dieser Winkel als doppelter Wert des in Fig. 4a dargestellten Umfangswinkels µ1 ergibt.

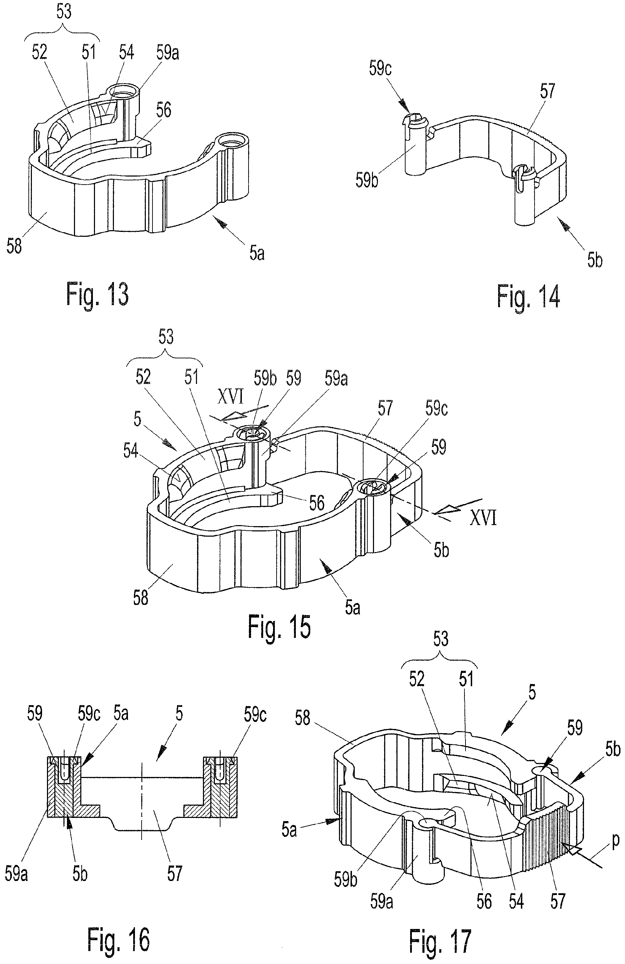

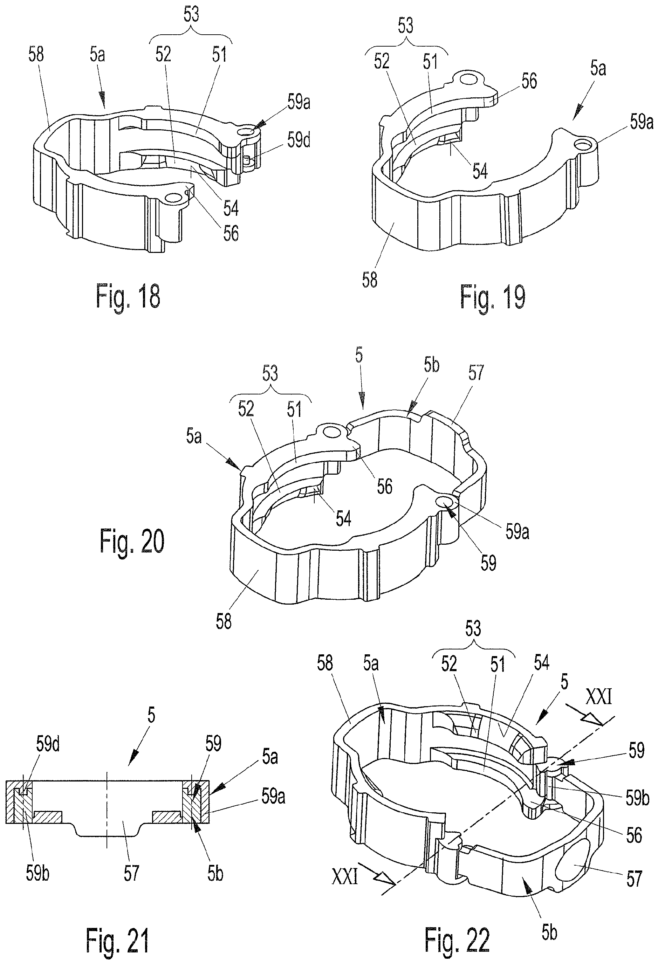

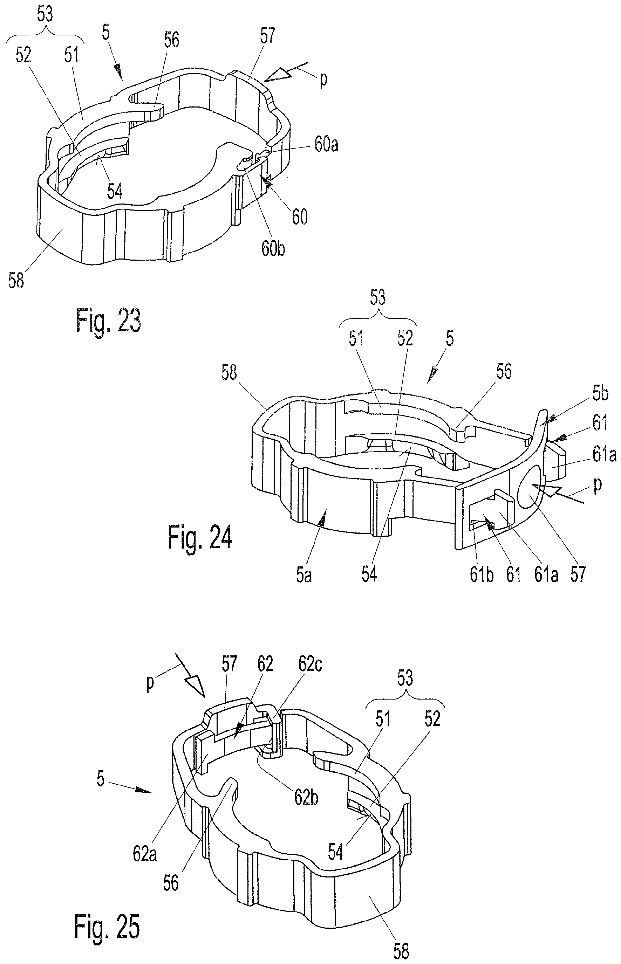

In Fig. 13 bis 17 ist eine zweite erfindungsgemäße Ausführung eines Halteteiles 5 dargestellt, in Fig. 18 bis 22 eine dritte, und in Fig. 23 bis 25 eine vierte, fünfte und sechste. Bei diesen Ausführungen (außer bei der dritten) ist es grundsätzlich vorteilhafterweise auch möglich, die Vormontage-Fixierung des Halteteils 5 ohne ein axiales Aufschieben des Halteteiles 5 auf das Kupplungsteil 2, 3 auszuführen, weil das Halteteil 5 entweder aus zwei, insbesondere lösbar und/oder gelenkig, miteinander verbundenen Einzelteilen 5a, 5b (zweite und fünfte Ausführung) oder aus einem einzigen Teil besteht, das aber über mindestens einen, vorzugsweise form- und/oder kraftformschlüssig wirkenden Verschluss verfügt, über den seine geschlossene Ringkontur geöffnet werden kann (vierte und sechste Ausführung).

Bei der zweiten Ausführung besteht das Halteteil 5 aus zwei, über Gelenke 59 lösbar miteinander verbindbaren Einzelteilen 5a, 5b, die in Fig. 13 und 14 jeweils separat und in Fig. 15 bis 17 im Zusammenbau gezeigt sind. Eine Lösbarkeit ist für einen bestimmungsgemäßen Gebrauch eines erfindungsgemäßen Halteteils 5 jedoch nicht notwendigerweise erforderlich bzw. vorzusehen. Im ersten Einzelteil 5a (Fig. 13) befindet sich dabei der C-förmige Haltebereich 53, während das zweite Einzelteil 5b (Fig. 14), welches in das erste Einzelteil 5a vorteilhafterweise eingeclipst werden kann, einen der beiden Betätigungsbereiche 57, 58, insbesondere den Betätigungsbereich mit der Druckfläche 57, bildet.

Die Gelenke 59 erleichtern das Aufspreizen des Halteteiles 5, wobei dadurch das zweite Einzelteil 5b aus einem weniger elastischen, also einem Material mit größerer Starrheit bzw. größerem Elastizitätsmodul, gefertigt werden kann. Dadurch deformiert es sich unter einem Betätigungsdruck p weniger als der entsprechende Betätigungsbereich 57 bei der ersten Ausführung.

Die Gelenke 59 können insbesondere als Scharniergelenke ausgebildet sein, wobei sich die Scharnierbuchsen 59a an dem einen Einzelteil 5a und die Scharnierstifte 59b an dem anderen Einzelteil 5b des Halteteiles 5 befinden. In bevorzugter Ausführung können die Scharnierstifte 59b - wie insbesondere aus Fig. 14 hervorgeht - einen Rastkopf 59c aufweisen, mittels dessen sie in den Scharnierbuchsen 59a durch ein einfaches Einclipsen befestigbar sind. Diese Befestigung, durch die die Einzelteile 5a, 5b zum Halteteil 5 verbunden sind, wird insbesondere durch Fig. 15 und 16 veranschaulicht.

Bei der dritten Ausführung der Erfindung (Fig. 18 bis 22) besteht das Halteteil 5 ebenfalls aus zwei, über scharnierartige Gelenke 59 miteinander verbindbaren Einzelteilen 5a, 5b, von denen eines in verschiedenen Ansichten in Fig. 18 und 19 separat gezeigt ist. Die Besonderheit des Halteteiles 5 gegenüber der zweiten Ausführung besteht hier darin, dass die Einzelteile 5a, 5b in einem ZweiKomponenten-Spritzgussverfahren gefertigt sind, wobei Fig. 20 bis 22 in verschiedenen Ansichten wiederum das Halteteil 5 als Ganzes zeigen. Das erste Einzelteil 5a bildet dabei einen Vorspritzling aus der ersten Komponente, in bzw. an den das aus der zweiten Komponente bestehende zweite Einzelteil 5b ein- bzw. angespritzt ist. Bevorzugt haften die beiden Einzelteile 5a, 5b nach dem Einspritzen nicht aneinander, was z. B. durch Aufbringen eines entsprechenden Trennmittels auf die Oberfläche des Vorspritzlings oder durch entsprechende Materialauswahl der Komponenten erreicht werden kann.

Insbesondere ein Vergleich der Schnittdarstellungen von Fig. 16 und 21 sowie die Darstellung in Fig. 18 zeigen dabei, dass sich im ersten Einzelteil 5a, in dem sich der C-förmige Haltebereich 53 befindet, auch wiederum die Scharnierbuchse 59a befindet, wobei diese jedoch einseitig geschlossen ist und axial im Verschlussbereich - nach der Art einer Angel - ein zusätzlicher Haltestift 59d ausgebildet ist, der im fertigen Zustand vom Material des zweiten Einzelteiles 5b formschlüssig umfasst wird. Diese Verbindung ist nicht lösbar.

Wie bereits erwähnt, besteht die in Fig. 23 dargestellte vierte Ausführung des Halteelementes aus einem einzigen Teil, das einen Verschluss 60 aufweist, über den seine geschlossene Ringkontur geöffnet werden kann. Dieser Verschluss 60 ist als Rastverschluss ausgebildet, wobei ein pilzartiger Dorn 60a, der insbesondere rückseitig von der Druckfläche 57 abragt, mit eine komplementär ausgebildeten Rastöffnung 60b zusammenwirkt, die sich insbesondere im Bereich eines nockenartigen Vorsprungs 56 befindet. Unter Verzicht auf die Einstückigkeit könnten auch zwei derartige Verschlüsse, insbesondere in axialsymmetrischer Anordnung vorgesehen sein. Der Verschluss kann rein formschlüssig oder kraftformschlüssig ausgebildet sein.

Auch bei der fünften Ausführung besteht das Halteteil 5 aus zwei miteinander verbindbaren Einzelteilen 5a, 5b, von denen das erste Einzelteil wiederum die Halteabschnitte 53 und das zweite Einzelteil die Druckfläche 57 umfasst. Das zweite Einzelteil 5b ist als Joch ausgebildet, welches über zwei formschlüssig wirkende Verschlüsse 61 am ersten Einzelteil befestigt bzw. befestigbar ist. Zur Herstellung dieser Verschlüsse 61 können widerhakenartig ausgebildete freie Enden 61a des ersten Einzelteils 5a elastisch verdreht und durch Öffnungen 61 b des Joches geführt werden. Nach einem Zurückdrehen der Enden 61a versperren die Widerhakenenden die Öffnung und verhindern ein Lösen der Einzelteile 5a, 5b voneinander, wie dies Fig. 24 zeigt.

Bei der in Fig. 25 gezeigten, sechsten Ausführung eines erfindungsgemäßen Halteteiles 5 ist ein Riegelverschluss 62 vorgesehen, der ebenfalls formschlüssig wirkt. Zur Herstellung des Verschlusses 62 kann ein Riegelteil 62a durch eine Öffnung 62b geführt werden, die sich in einem Verschlussabschnitt 62c des Halteteiles befindet, der insbesondere rückseitig von der Druckfläche 57 abragt. Das Riegelteil 62a wird wiederum - ähnlich wie bei der fünften Ausführung - durch ein widerhakenartig ausgebildetes freies Enden 61a des ersten Einzelteils 5a gebildet. In bevorzugter alternativer Fertigungsweise kann der Verschlussmechanismus 62a, 62b, 62 in der Verschlussstellung - so wie in Fig. 25 gezeigt - bereits im Urformprozess des Halteteiles 5, also vorzugsweise in einem Spritzgießprozess, gebildet werden und muss damit nicht lösbar sein.

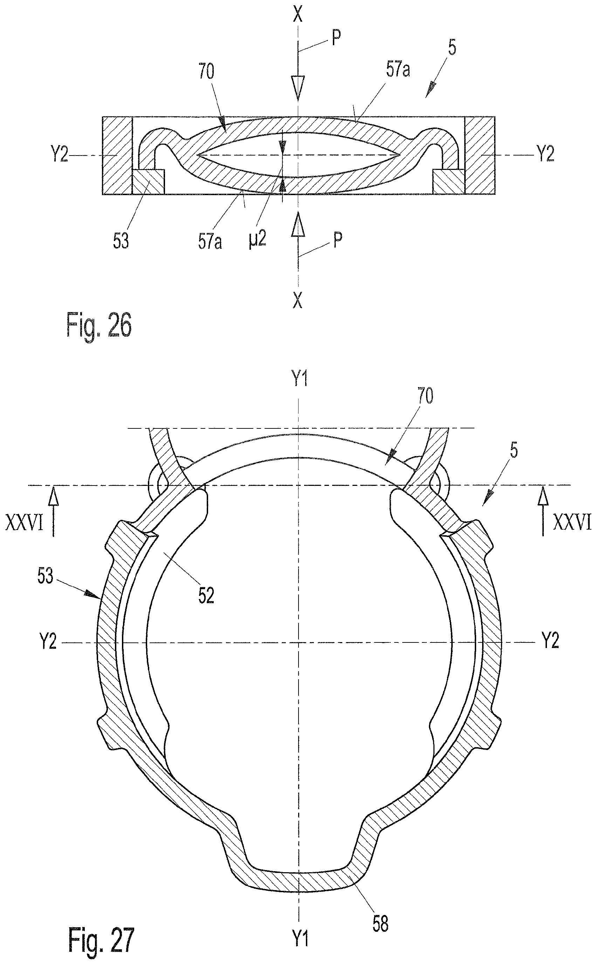

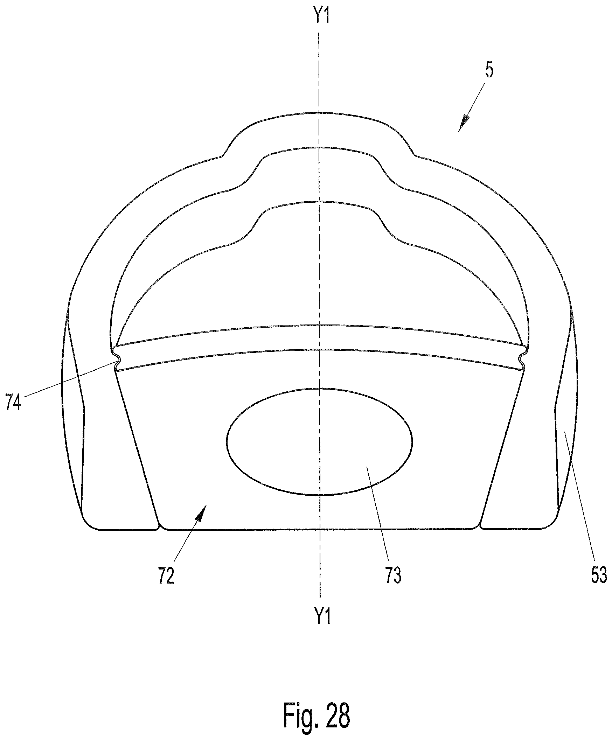

Im Gegensatz zu allen vorhergehend beschriebenen Ausführungen des erfindungsgemäßen Halteteiles 5, bei denen an den Querseiten des Halteteils 5 zwischen den Halteabschnitten 53 die elastischen Betätigungsbereiche 57, 58 ausgebildet sind, bezieht sich die in Fig. 26 und 27 dargestellte siebte Ausführung eines erfindungsgemäßen Halteteils 5 auf eine Halteteilkonstruktion, bei der ein Betätigen bzw. Drücken auf mindestens eine Druckfläche 57a - dargestellt sind zwei derartige Druckflächen 57a (Druckpfeile p in Fig. 26) - erfolgt, wobei der aufgewendete Druck nicht in der Bewegungsebene des Aufspreizens liegt, sondern im Wesentlichen senkrecht dazu steht. Hierbei wird ein auf dem Scherenprinzip beruhendes gummielastisches Bügelteil 70 eingesetzt, welches-wie Fig. 26 und 27 zeigen - mit dem Halteabschnitt 53 verbunden bzw. verbindbar ist. Da auf dieses Bügelteil 70 die Betätigungsdeformation nicht in der Horizontalebene Y1-Y1 (Fig. 10 bis 12), sondern in der Vertikalebene X-X (Fig. 26) aufgebracht wird, kann das Halteteil 5 in vorteilhafter Weise gegenüber den vorhergehend beschriebenen Ausführungen in seiner Längserstreckung (Achse Y1-Y1) kürzer ausgeführt werden. Gleiches ist bei der in Fig. 28 dargestellten achten Ausführung der Fall. Hierbei wird ein Betätigungskeil 72 eingesetzt, der durch einen Druck - insbesondere mit einem Daumen - auf eine vorzugsweise dafür vorgesehene Fingerbetätigungsmulde 73 als Betätigungsbereich in Vertikalrichtung X-X verschoben werden kann. Vorzugsweise kann die Führung 74 des Betätigungskeils 72 im Halteabschnitt 53 dabei als eine Schwalbenschwanzführung ausgeführt sein. Das Aufspreizen kann über eine schiefe Ebene mit Rastfunktion erfolgen.

Wie bereits aus den vorstehenden Ausführungen hervorgeht, ist die Erfindung nicht auf die dargestellten und beschriebenen Ausführungsbeispiele beschränkt, sondern vielmehr durch die Merkmale von die Ansprüche 1 bis 15 offenbart.

Des Weiteren können die Kupplungsteile 2, 3 auf ihren der Steckverbindungsseite gegenüberliegenden Seiten grundsätzlich beliebige Anschlusselemente aufweisen. In der dargestellten Ausführung weist das Steckerteil 3 einen Anschlussdorn 35 für eine Fluid-Leitung (Rohr oder Schlauch) auf. Das Muffenteil 2 besitzt keine spezifische Ausbildung, kann aber beispielsweise einen Einschraubstutzen aufweisen, wobei aber auch mindestens eines der Kupplungsteile 2, 3, wie bevorzugt das Muffenteil 2, auch direkt (einstückig) an bestimmten Aggregaten ausgebildet sein kann.

## Patentansprüche

1. Steckverbindung (1) für Fluid-Leitungen, umfassend zwei zusammensteckbare Kupplungsteile (2, 3), die im eingesteckten Zustand über eine Verriegelungseinrichtung (4) lösbar arretierbar ist, die einerseits aus zwei äußeren, radialen, flanschartigen und im eingesteckten Zustand axial (X-X), in Steckrichtung (S) benachbarten Haltestegen (21, 31) der beiden Kupplungsteile (2, 3) und andererseits aus einem Halteteil (5) mit einer umfangsgemäß geschlossenen Ringkontur besteht, welches in einem Vormontagezustand an einem der beiden Kupplungsteile (3) axial und radial fixiert unverlierbar montierbar ist und im Montagezustand mit mindestens einem im Axialschnitt C-förmigen, zwei Bünde (51, 52) aufweisenden, radial elastisch beweglichen Halteabschnitt (53) die Haltestege (21, 31) der beiden Kupplungsteile (2, 3) axial und radial umgreift, wobei die Bünde (51, 52) des Halteteiles (5) derart mit unterschiedlicher Größe und/oder Form ausgebildet sind, dass bei einer radial elastischen Bewegung des Halteabschnittes (53) aus dem Montagezustand heraus nach außen ein Bund (52), der im Montagezustand am Haltesteg (21) des einen Kupplungsteiles (2) anliegt, diesen Haltesteg (21) des Kupplungsteiles (2) freigibt, während der andere Bund (51), zumindest bereichsweise, den Haltesteg (31) des anderen Kupplungsteiles (3), an dem er anliegt, noch hintergreift,
**dadurch gekennzeichnet, dass** einer der beiden Bünde (51, 52) einen nockenartigen, umfangsgemäß verlaufenden, zusätzlich radial einwärts gewölbten Ansatz (56) aufweist, durch den er sich in Größe und Form von dem anderen Bund (52, 51) unterscheidet und um den er- in axialer Projektion gesehen - gegenüber dem anderen Bund (52, 51) vorsteht, wobei zwei einander gegenüber liegende im Axialschnitt C-förmige, jeweils zwei Bünde (51, 52) aufweisende, radial elastische bewegliche Halteabschnitte (53) vorhanden sind, und wobei von jeweils zwei in den beiden Halteabschnitten (53) gleichartig ausgebildeten Bünden (51, 52) sich jeweils der Bund (51) mit dem Ansatz (56) sowohl nach einer Vormontage des Halteteils (5) an einem der beiden Kupplungsteile (2, 3), als auch nach einer Montage mit beiden Kupplungsteilen (2, 3) und bei einer Demontage des Halteteils (5) über einen Umfangswinkel (µ1) mindestens eines Kupplungsteiles (2, 3) erstreckt, der derart groß bemessen ist, dass in einem maximal gespreizten Zustand des Halteteiles (5) ein Abstand (A) zwischen den Ansätzen (56) zweier sich diametral gegenüber liegender Bünde (51) stets kleiner ist als ein Durchmesser (D2, D3) des Kupplungsteils (2, 3), an dem der Bund (51) anliegt.

2. Steckverbindung (1) nach Anspruch 1,
**dadurch gekennzeichnet, dass** ein Bund (52) des Halteteiles (5) im Bereich des Halteabschnittes (53) als Rastelement ausgebildet ist, welches auf der beim Steckvorgang dem Kupplungsteil (2) zugewandten Seite eine als Spreizfläche ausgebildete radiale innere Schrägfläche (54) aufweist, die durch den sich beim Stecken relativ bewegenden Haltesteg (21) des Kupplungsteiles (2) eine radial nach außen gerichtete Spreizbewegung des Halteteiles (5) bewirkt, wobei der Bund (52) nach einem Verrasten mit dem Kupplungsteil (2) mit einer radialen Haltekante den Haltesteg (21) rastend formschlüssig hintergreift.

3. Steckverbindung (1) nach Anspruch 2,
**dadurch gekennzeichnet, dass** die Spreizfläche (54), indem sie relativ zu einer Gegen-Spreizfläche (22) des Haltesteges (21) gleitet, unter der Wirkung einer Montagekraft beim Einstecken um einen Montageweg, eine Spreizbewegung des Halteteiles (5) quer zur Achse (X-X) um einen Spreizweg bewirkt, wobei eine einer Gegen-Spreizfläche (22) zugewandte Kontur der Spreizfläche (54) derart auf eine der Spreizfläche (54) zugewandte Gegen-Kontur der Gegen-Spreizfläche (22) abgestimmt ist, dass sich der Spreizweg beim Einstecken in Abhängigkeit vom Montageweg nichtlinear ändert.

4. Steckverbindung (1) nach einem der Ansprüche 1 bis 3,
**dadurch gekennzeichnet, dass** das Halteteil (5) als bevorzugt einteiliger elastischer Ring ausgebildet ist, der in insbesondere radialsymmetrischer Umfangsverteilung mindestens zwei im Axialschnitt C-förmige Halteabschnitte (53) aufweist, die sich in den Längsseiten befinden.

5. Steckverbindung (1) nach einem der Ansprüche 1 bis 4,
**dadurch gekennzeichnet, dass** die Bünde (51, 52) des Halteabschnittes (53) eine sichelförmige Gestalt aufweisen, so dass sie im Montagezustand einen Schaft (30) des Steckerteiles (3), vorzugsweise im Bereich einer Umfangsnut (33) des Steckerteiles (3), und das Muffenteil (2), vorzugsweise im Bereich einer Umfangsnut (23) des Muffenteils (2), formschlüssig umgreifen.

6. Steckverbindung (1) nach einem der Ansprüche 1 bis 5,
**dadurch gekennzeichnet, dass** die Bünde (51, 52) sich in Größe und/oder Form dadurch unterscheiden, dass der eine Bund (51) im Montagezustand eines der Kupplungsteile (2, 3), vorzugsweise das Steckerteil (3) über einen größeren Zentriwinkel (µ1) umfasst, als es ein Zentriwinkel (µ2) ist, um den der andere Bund (52) das andere Kupplungsteil (3, 2), vorzugsweise das Muffenteil (2), umfasst.

7. Steckverbindung (1) nach einem der Ansprüche 1 bis 6,
**dadurch gekennzeichnet, dass** umfangsgemäß zwischen zwei Haltebereichen (53), vorzugsweise an Querseiten des Halteteils (5), elastische Betätigungsbereiche (57, 58) ausgebildet sind, in denen durch ein Betätigen bzw. Drücken auf eine Druckfläche (57) oder durch ein Ziehen bzw. Hebeln mit einem Werkzeug unter Angriff an einem Zugbereich (58) - jeweils in Richtung einer Längsachse (Y1-Y1) des Halteteils (5) bei der Demontage eine radiale Aufweitung der Halteabschnitte (53) herbeigeführt werden kann.

8. Steckverbindung (1) nach Anspruch 7,
**dadurch gekennzeichnet, dass** die Betätigungsbereiche (57, 58) Anschläge bilden, die derart ausgeführt sind, dass sie, wenn sie zur Anlage an einem der Kupplungteile (2, 3), insbesondere am Schaft (30) des Steckerteils (3), besonders bevorzugt an einem Fixierringsteg (34) des Schaftes (30), die Spreizbewegung des Halteteils (5), also die radial elastische Bewegung jedes Halteabschnittes (53) nach außen, begrenzen.

9. Steckverbindung (1) nach einem der Ansprüche 1 bis 6,
**dadurch gekennzeichnet, dass** zwischen zwei Haltebereichen (53) ein Bügelteil (70) oder ein Betätigungselement (72) angeordnet ist, mit dem durch ein jeweils in Richtung einer Vertikalachse (X-X) des Halteteils (5) erfolgendes Betätigen bzw. Drücken auf Betätigungsbereiche (57a, 73) bei der Demontage eine radiale Aufweitung der Halteabschnitte (53) herbeigeführt werden kann.

10. Steckverbindung (1) nach einem der Ansprüche 1 bis 9,
**dadurch gekennzeichnet, dass** das Halteteil (5) aus zwei, insbesondere lösbar und/oder gelenkig, miteinander verbindbaren bzw. verbundenen Einzelteilen (5a, 5b) besteht.

11. Steckverbindung (1) nach einem der Ansprüche 1 bis 10,
**dadurch gekennzeichnet, dass** das Halteteil (5) mindestens einen form- und/oder kraftformschlüssig wirkenden Verschluss (60, 61, 62), wie einen Rastverschluss (60) oder einen Riegelverschluss (62), zum Öffnen und Verschließen seiner geschlossenen Ringkontur aufweist, wobei es vorzugsweise einstückig ausgebildet ist.

12. Steckverbindung nach einem der Ansprüche 1 bis 11, **dadurch gekennzeichnet, dass** in einem der beiden Kupplungsteile (2, 3), bevorzugt im Schaft (30) des Stekerteiles (3) axial zwischen dem Haltesteg (31) und einem zusätzlichen Fixierringsteg (34) eine umfangsgemäße Ringnut (33) gebildet ist.

13. Halteteil (5) für eine Steckverbindung mit zwei Kupplungsteilen (2, 3) nach dem Oberbegriff des Anspruchs 1, mit einer umfangsgemäß geschlossenen Ringkontur, welches in einem Vormontagezustand an einem Kupplungsteil (3) der Steckverbindung axial und radial fixiert unverlierbar montierbar ist und derart ausgebildet ist, dass es in einem Montagezustand mit mindestens einem im Axialschnitt C-förmigen, zwei Bünde (51, 52) aufweisenden, radial elastisch beweglichen Halteabschnitt (53) Haltestege (21, 31) der beiden Kupplungsteile (2, 3) axial und radial umgreift, wobei die Bünde (51, 52) derart mit unterschiedlicher Größe und/oder Form ausgebildet sind, dass bei einer radial elastischen Bewegung des Halteabschnittes (53) aus dem Montagezustand heraus nach außen ein Bund (52), der im Montagezustand am Haltesteg (21) des einen Kupplungsteiles (2) anliegt, diesen Haltesteg (21) des Kupplungsteiles (2) freigibt, während der andere Bund (51), zumindest bereichsweise, den Haltesteg (31) des anderen Kupplungsteiles (3), an dem er anliegt, noch hintergreift,
**dadurch gekennzeichnet, dass** einer der beiden Bünde (51, 52) einen nockenartigen, umfangsgemäß verlaufenden, zusätzlich radial einwärts gewölbten Ansatz (56) aufweist, durch den er sich in Größe und Form von dem anderen Bund (52, 51) unterscheidet und um den er - in axialer Projektion gesehen - gegenüber dem anderen Bund (52, 51) vorsteht, wobei zwei einander gegenüber liegende im Axialschnitt C-förmige, jeweils zwei Bünde (51, 52) aufweisende, radial elastische bewegliche Halteabschnitte (53) vorhanden sind, und wobei von jeweils zwei in den beiden Halteabschnitten (53) sich jeweils der Bund (51) mit dem Ansatz (56) sowohl nach einer Vormontage des Halteteils (5) an einem der beiden Kupplungsteile (2, 3), als auch nach einer Montage mit beiden Kupplungsteilen (2, 3) und bei einer Demontage des Halteteils (5) über einen Umfangswinkel (µ1) mindestens eines Kupplungsteiles (2, 3) erstreckt, der derart groß bemessen ist, dass in einem maximal gespreizten Zustand des Halteteiles (5) ein Abstand (A) zwischen den Ansätzen (56) zweier sich diametral gegenüber liegender Bünde (51) stets kleiner ist als ein Durchmesser (D2, D3) des Kupplungsteils (2, 3), an dem der Bund (51) anliegt.

14. Halteteil (5) nach Anspruch 13,
**gekennzeichnet durch** die Merkmale eines Halteteiles (5) gemäß dem kennzeichnenden Teil eines oder mehrerer der Ansprüche 2 bis 11.

15. Vormontierte Baueinheit, bestehend aus einem Halteteil (5) nach einem der Ansprüche 13 oder 14, das in einem Vormontagezustand an einem Kupplungsteil (2, 3) einer Steckverbindung (1) nach einem der Ansprüche 1 bis 12, unverlierbar befestigt ist.

## Claims

1. Plug connection (1) for fluid lines, comprising two coupling parts (2, 3) which are pluggable together, said plug connection being releasably lockable in the plugged-in state via a locking device (4) which consists firstly of two outer, radial, flange-like holding webs (21, 31) of the two coupling parts (2, 3), said holding webs being axially (X-X) adjacent in the plug-in direction (S) in the plugged-in state, and secondly of a holding part (5) with a circumferentially closed annular contour, which holding part, in a preassembly state, is mountable in an axially and radially captively fixed manner on one of the two coupling parts (3) and, in the assembly state, said holding part axially and radially engages around the holding webs (21, 31) of the two coupling parts (2, 3) with at least one radially elastically movable holding portion (53), which is C-shaped in axial section and has two collars (51, 52), wherein the collars (51, 52) of the holding part (5) are formed with a different size and/or shape in such a manner that, in the event of a radially elastic movement of the holding portion (53) outwards out of the assembly state, a collar (52) which, in the assembly state, lies against the holding web (21) of the one coupling part (2), releases said holding web (21) of the coupling part (2), while the other collar (51) still engages, at least in regions, behind the holding web (31) of the other coupling part (3), against which said collar lies, **characterized in that** one of the two collars (51, 52) has a cam-like, circumferentially extending and additionally radially inwardly curved extension (56), by means of which said collar differs in size and shape from the other collar (52, 51) and about which said collar protrudes - as seen in axial projection - in relation to the other collar (52, 51), wherein there are two mutually opposite, radially elastic, movable holding portions (53), which are C-shaped in axial section and each have two collars (51, 52), and wherein, of in each case two collars (51, 52) formed similarly in the two holding portions (53), in each case the collar (51) with the extension (56) extends both after preassembly of the holding part (5) on one of the two coupling parts (2, 3) and after assembly with the two coupling parts (2, 3) and upon removal of the holding part (5) over a circumferential angle (µ1) of at least one coupling part (2, 3), which circumferential angle (µ1) is dimensioned to be of a size such that, in a maximally expanded state of the holding part (5), a distance (A) between the extensions (56) of two diametrically opposite collars (51) is always smaller than a diameter (D2, D3) of the coupling part (2, 3) against which the collar (51) lies.

2. Plug connection (1) according to Claim 1, **characterized in that** a collar (52) of the holding part (5) is designed in the region of the holding portion (53) as a latching element which, on the side facing the coupling part (2) during the plugging operation, has a radial, inner oblique surface (54) which is designed as an expansion surface and which brings about a radially outwardly directed expansion movement of the holding part (5) by means of the holding web (21), which moves relatively during the plugging action, of the coupling part (2), wherein the collar (52) after latching to the coupling part (2) engages behind the holding web (21) with a radial holding edge in a form-fitting latching manner.

3. Plug connection (1) according to Claim 2, **characterized in that** the expansion surface (54) brings about an expansion movement of the holding part (5) by an expansion path transversely with respect to the axis (X-X) by said expansion surface sliding relative to a mating expansion surface (22) of the holding web (21) under the action of an assembly force during the plugging-in by an assembly distance, wherein a contour of the expansion surface (54) that faces a mating expansion surface (22) is coordinated with a mating contour of the mating expansion surface (22) that faces the expansion surface (54) in such a manner that the expansion distance changes non-linearly depending on the assembly distance during the plugging-in action.

4. Plug connection (1) according to one of Claims 1 to 3, **characterized in that** the holding part (5) is designed as a preferably single-part elastic ring which, in an in particular radially symmetrical circumferential distribution, has at least two holding portions (53) which are C-shaped in axial section and are located in the longitudinal sides.

5. Plug connection (1) according to one of Claims 1 to 4, **characterized in that** the collars (51, 52) of the holding portion (53) have a sickle-shaped configuration such that, in the assembly state, they engage in a form-fitting manner around a stem (30) of the plug part (3), preferably in the region of a circumferential groove (33) of the plug part (3), and the sleeve part (2), preferably in the region of a circumferential groove (23) of the sleeve part (2).

6. Plug connection (1) according to one of Claims 1 to 5, **characterized in that** the collars (51, 52) differ in size and/or shape **in that**, in the assembly state, the one collar (51) surrounds one of the coupling parts (2, 3), preferably the plug part (3), over a greater central angle (µ1) than a central angle (µ2) about which the other collar (52) surrounds the other coupling part (3, 2), preferably the sleeve part (2).

7. Plug connection (1) according to one of Claims 1 to 6, **characterized in that** elastic actuating regions (57, 58) are formed circumferentially between two holding regions (53), preferably on transverse sides of the holding part (5), in which actuating regions a radial expansion of the holding portions (53) can be brought about by an actuation or pressing on a pressure surface (57) or by pulling or levering with a tool with engagement on a tension region (58) - in each case in the direction of a longitudinal axis (Y1-Y1) of the holding part (5) - during the removal.

8. Plug connection (1) according to Claim 7, **characterized in that** the actuating regions (57, 58) form stops which are designed in such a manner that, when they are in contact with one of the coupling parts (2, 3), in particular with the stem (30) of the plug part (3), particularly preferably with a fixing ring web (34) of the stem (30), said stops limit the expansion movement of the holding part (5), i.e. the radially elastic movement of each holding portion (53) outwards.

9. Plug connection (1) according to one of Claims 1 to 6, **characterized in that** a bow part (70) or an actuating element (72) is arranged between two holding regions (53) and with which a radial expansion of the holding portions (53) can be brought about by an actuation or pressing, which takes place in each case in the direction of a vertical axis (X-X) of the holding part (5), on actuating regions (57a, 73) during the removal.

10. Plug connection (1) according to one of Claims 1 to 9, **characterized in that** the holding part (5) consists of two individual parts (5a, 5b) which are connectable or are connected to each other, in particular in a releasable and/or articulated manner.

11. Plug connection (1) according to one of Claims 1 to 10, **characterized in that** the holding part (5) has at least one closure (60, 61, 62) acting in a form-fitting and/or force-fitting manner, such as a latching closure (60) or a locking closure (62), for opening and closing its closed annular contour, wherein said holding part is preferably designed as a single part.

12. Plug connection according to one of Claims 1 to 11, **characterized in that** a circumferential annular groove (33) is formed axially between the holding web (31) and an additional fixing ring web (34) in one of the two coupling parts (2, 3), preferably in the stem (30) of the plug part (3).

13. Holding part (5) for a plug connection with two coupling parts (2, 3) according to the preamble of Claim 1, with a circumferentially closed annular contour, which holding part, in a preassembly state, is mountable in an axially and radially captively fixed manner on a coupling part (3) of the plug connection and is designed in such a manner that, in an assembly state, said holding part axially and radially engages around holding webs (21, 31) of the two coupling parts (2, 3) with at least one radially elastically movable holding portion (53), which is C-shaped in axial section and has two collars (51, 52), wherein the collars (51, 52) are formed with a different size and/or shape in such a manner that, in the event of a radially elastic movement of the holding portion (53) outwards out of the assembly state, a collar (52), which, in the assembly state, lies against the holding web (21) of the one coupling part (2), releases said holding web (21) of the coupling part (2), while the other collar (51) still engages, at least in regions, behind the holding web (31) of the other coupling part (3), against which said collar lies, **characterized in that** one of the two collars (51, 52) has a cam-like, circumferentially extending and additionally radially inwardly curved extension (56), by means of which said collar differs in size and shape from the other collar (52, 51) and about which said collar protrudes - as seen in axial projection - in relation to the other collar (52, 51), wherein there are two mutually opposite, radially elastic, movable holding portions (53), which are C-shaped in axial section and each have two collars (51, 52), and wherein, of in each case two in the two holding portions (53), in each case the collar (51) with the extension (56) extends both after preassembly of the holding part (5) on one of the two coupling parts (2, 3) and after assembly with the two coupling parts (2, 3) and upon removal of the holding part (5) over a circumferential angle (µ1) of at least one coupling part (2, 3), which circumferential angle (µ1) is dimensioned to be of a size such that, in a maximally expanded state of the holding part (5), a distance (A) between the extensions (56) of two diametrically opposite collars (51) is always smaller than a diameter (D2, D3) of the coupling part (2, 3) against which the collar (51) lies.

14. Holding part (5) according to Claim 13, **characterized by** the features of a holding part (5) according to the characterizing part of one or more of Claims 2 to 11.

15. Preassembled constructional unit consisting of a holding part (5) according to either of Claims 13 and 14 which, in a preassembly state, is fastened captively to a coupling part (2, 3) of a plug connection (1) according to one of Claims 1 to 12.

## Revendications

1. Assemblage par emboîtement (1) pour des conduites de fluide, comprenant deux parties de couplage emboîtables (2, 3), qui à l'état emboîté peuvent être calées de façon séparable au moyen d'un dispositif de verrouillage (4), qui se compose d'une part de deux nervures de maintien (21, 31) extérieures, radiales, en forme de brides et axialement proches (X-X) dans la direction d'emboîtement (S) à l'état emboîté, des deux parties de couplage (2, 3) et d'autre part d'une pièce de retenue (5) avec un contour annulaire fermé selon la périphérie, qui dans un état de pré-montage peut être montée de façon imperdable en étant fixée axialement et radialement à une des deux parties de couplage (3) et qui dans l'état de montage entoure axialement et radialement avec au moins une partie de retenue (53) en forme de C en section axiale, présentant deux rebords (51, 52) et élastiquement mobile radialement, les nervures de maintien (21, 31) des deux parties de couplage (2, 3), dans lequel les rebords (51, 52) de la pièce de retenue (5) sont réalisés avec une taille et/ou une forme différente, de telle manière que lors d'un mouvement radialement élastique de la partie de retenue (53) vers l'extérieur hors de l'état de montage, un rebord (52), qui dans l'état de montage repose sur la nervure de maintien (21) de la première partie de couplage (2), libère cette nervure de maintien (21) de la partie de couplage (2), tandis que l'autre rebord (51) s'accroche encore, au moins localement, derrière la nervure de maintien (31) de l'autre partie de couplage (3), sur laquelle il est appliqué,
**caractérisé en ce qu'**un des deux rebords (51, 52) présente un appendice (56) en forme de came, s'étendant selon la périphérie, en plus incurvé radialement vers l'intérieur, par lequel il se différencie en taille et en forme de l'autre rebord (52, 51) et par lequel - considéré en projection axiale - il est saillant par rapport à l'autre rebord (52, 51), dans lequel il se trouve deux parties de retenue (53) opposées l'une à l'autre, en forme de C en section axiale, présentant chacune deux rebords (51, 52) et élastiquement mobiles radialement, et dans lequel parmi chaque fois deux rebords (51, 52) configurés de manière identique dans les deux parties de retenue (53) chaque fois le rebord (51) avec l'appendice (56) s'étend aussi bien après un pré-montage de la pièce de retenue (5) sur une des deux parties de couplage (2, 3) qu'après un montage avec deux parties de couplage (2, 3) et lors d'un démontage de la pièce de retenue (5) sur un angle périphérique (µ1) d'au moins une partie de couplage (2, 3), qui est dimensionné en valeur de telle manière que dans un état écarté au maximum de la pièce de retenue (5) une distance (A) entre les appendices (56) de deux rebords diamétralement opposés (51) soit toujours plus petite qu'un diamètre (D2, D3) de la partie de couplage (2, 3) sur laquelle le rebord (51) est appliqué.

2. Assemblage par emboîtement (1) selon la revendication 1, **caractérisé en ce qu'**un rebord (52) de la pièce de retenue (5) est réalisé dans la région de la partie de retenue (53) en forme d'élément d'encliquetage, qui présente sur le côté tourné vers la partie de couplage (2) lors de l'opération d'emboîtement une face oblique intérieure radiale (54) réalisée en forme de face d'écartement, qui par la nervure de maintien (21) de la partie de couplage (2) se déplaçant relativement lors de l'emboîtement provoque un mouvement d'écartement dirigé radialement vers l'extérieur de la pièce de retenue (5), dans lequel le rebord (52) s'accroche de façon emboîtée par encliquetage avec une arête de retenue radiale derrière la nervure de maintien (21) après un encliquetage avec la partie de couplage (2).

3. Assemblage par emboîtement (1) selon la revendication 2, **caractérisé en ce que** la face d'écartement (54), du fait qu'elle glisse par rapport à une contre-face d'écartement (22) de la nervure de maintien (21), provoque sous l'action d'une force de montage, lors de l'emboîtement sur une course de montage, un mouvement d'écartement de la pièce de retenue (5) transversalement à l'axe (X-X) sur une course d'écartement, dans lequel un contour de la face d'écartement (54) tourné vers une contre-face d'écartement (22) est accordé à un contour de la contre-face d'écartement (22) tourné vers la face d'écartement (54), de telle manière que la course d'écartement lors de l'emboîtement varie de façon non linéaire en fonction de la course de montage.

4. Assemblage par emboîtement (1) selon l'une quelconque des revendications 1 à 3, **caractérisé en ce que** la pièce de retenue (5) est réalisée sous la forme d'un anneau élastique de préférence en une pièce, qui présente dans une répartition périphérique en particulier radialement symétrique au moins deux parties de retenue (53) en forme de C en section axiale, qui se trouvent dans les longs côtés.

5. Assemblage par emboîtement (1) selon l'une quelconque des revendications 1 à 4, **caractérisé en ce que** les rebords (51, 52) de la partie de retenue (53) présentent une configuration en forme de croissant, de telle manière que dans l'état de montage ils entourent de façon emboîtée un corps (30) de la partie mâle (3), de préférence dans la région d'une rainure périphérique (33) de la partie mâle (3), et la partie femelle (2), de préférence dans la région d'une rainure périphérique (23) de la partie femelle (2).

6. Assemblage par emboîtement (1) selon l'une quelconque des revendications 1 à 5, **caractérisé en ce que** les rebords (51, 52) se différencient en taille et/ou en forme, **en ce qu'**un premier rebord (51) entoure, dans l'état de montage d'une des parties de couplage (2, 3), de préférence la partie mâle (3) sur un angle au centre (µ1) plus grand qu'un angle au centre (µ2) par lequel l'autre rebord (52) entoure l'autre partie de couplage (3, 2), de préférence la partie femelle (2).

7. Assemblage par emboîtement (1) selon l'une quelconque des revendications 1 à 6, **caractérisé en ce que** des régions d'actionnement élastiques (57, 58) sont formées en périphérie entre deux régions de retenue (53), de préférence sur des côtés transversaux de la pièce de retenue (5), dans lesquelles il est possible d'opérer un écartement radial des parties de retenue (53) par un actionnement ou une pression sur une face de pression (57) ou par une traction ou un soulèvement au moyen d'un outil avec action sur une région de traction (58) - chaque fois dans la direction d'un axe longitudinal (Y1-Y1) de la pièce de retenue (5) lors du démontage.

8. Assemblage par emboîtement (1) selon la revendication 7, **caractérisé en ce que** les régions d'actionnement (57, 58) forment des butées, qui sont réalisées de telle manière que, lorsqu'elles viennent à butée contre une des parties de couplage (2, 3), en particulier contre le corps (30) de la partie mâle (3), de préférence encore contre une nervure annulaire de fixation (34) du corps (30), limitent le mouvement d'écartement de la pièce de retenue (5), donc le mouvement radialement élastique de chaque partie de retenue (53) vers l'extérieur.

9. Assemblage par emboîtement (1) selon l'une quelconque des revendications 1 à 6, **caractérisé en ce qu'**un étrier (70) ou un élément d'actionnement (72) est disposé entre deux régions de retenue (53), avec lequel il est possible d'opérer un écartement des parties de retenue (53) lors du démontage par un actionnement ou une pression sur des régions d'actionnement (57a, 73) se produisant chaque fois dans la direction d'un axe vertical (X-X) de la pièce de retenue (5).

10. Assemblage par emboîtement (1) selon l'une quelconque des revendications 1 à 9, **caractérisé en ce que** la pièce de retenue (5) se compose de deux parties individuelles (5a, 5b) reliées ou pouvant être reliées l'une à l'autre, en particulier de façon séparable et/ou articulée.

11. Assemblage par emboîtement (1) selon l'une quelconque des revendications 1 à 10, **caractérisé en ce que** la pièce de retenue (5) présente au moins une fermeture (60, 61, 62) opérant par emboîtement et/ou par emboîtement et adhérence, comme une fermeture à déclic (60) ou une fermeture à verrou (62), pour ouvrir et fermer son contour annulaire fermé, dans lequel il est de préférence réalisé en une seule pièce.

12. Assemblage par emboîtement selon l'une quelconque des revendications 1 à 11, **caractérisé en ce qu'**une rainure annulaire périphérique (33) est formée dans une des deux parties de couplage (2, 3), de préférence dans le corps (30) de la partie mâle (3) axialement entre la nervure de maintien (31) et une nervure annulaire de fixation supplémentaire (34).

13. Pièce de retenue (5) pour un assemblage par emboîtement avec deux parties de couplage (2, 3) selon le préambule de la revendication 1, avec un contour annulaire fermé suivant la périphérie, qui dans un état de pré-montage peut être montée de façon imperdable en étant fixée axialement et radialement à une partie de couplage (3) de l'assemblage par emboîtement et qui est configurée de telle manière que dans un état de montage elle entoure axialement et radialement avec au moins une partie de retenue (53) en forme de C en section axiale, présentant deux rebords (51, 52) et élastiquement mobile radialement, des nervures de maintien (21, 31) des deux parties de couplage (2, 3), dans laquelle les rebords (51, 52) sont réalisés avec une taille et/ou une forme différente, de telle manière que lors d'un mouvement radialement élastique de la partie de retenue (53) vers l'extérieur hors de l'état de montage, un rebord (52), qui dans l'état de montage repose sur la nervure de maintien (21) de la partie de couplage (2), libère cette nervure de maintien (21) de la partie de couplage (2), tandis que l'autre rebord (51) s'accroche encore, au moins localement, derrière la nervure de maintien (31) de l'autre partie de couplage (3), sur laquelle il est appliqué, **caractérisée en ce qu'**un des deux rebords (51, 52) présente un appendice (56) en forme de came, s'étendant selon la périphérie, en plus incurvé radialement vers l'intérieur, par lequel il se différencie en taille et en forme de l'autre rebord (52, 51) et par lequel - considéré en projection axiale - il est saillant par rapport à l'autre rebord (52, 51), dans laquelle il se trouve deux parties de retenue (53) opposées l'une à l'autre, en forme de C en section axiale, présentant chacune deux rebords (51, 52) et élastiquement mobiles radialement, et dans laquelle parmi chaque fois deux dans les deux parties de retenue (53) chaque fois le rebord (51) avec l'appendice (56) s'étend aussi bien après un pré-montage de la pièce de retenue (5) sur une des deux parties de couplage (2, 3) qu'après un montage avec deux parties de couplage (2, 3) et lors d'un démontage de la pièce de retenue (5) sur un angle périphérique (µ1) d'au moins une partie de couplage (2, 3), qui est dimensionné en valeur de telle manière que dans un état écarté au maximum de la pièce de retenue (5) une distance (A) entre les appendices (56) de deux rebords diamétralement opposés (51) soit toujours plus petite qu'un diamètre (D2, D3) de la partie de couplage (2, 3) sur laquelle le rebord (51) est appliqué.

14. Pièce de retenue (5) selon la revendication 13, **caractérisée par** les caractéristiques d'une pièce de retenue (5) selon la partie caractéristique d'une ou de plusieurs des revendications 2 à 11.

15. Unité de construction préassemblée, se composant d'une pièce de retenue (5) selon une des revendications 13 ou 14, qui dans un état de pré-montage est fixée à une partie de couplage (2, 3) d'un assemblage par emboîtement (1) selon l'une quelconque des revendications 1 à 12.
